# EUROPEAN PATENT APPLICATION

(11) **EP 3 657 040 A1**
(43) Date of publication of application: **27.05.2020**
(21) Application number: 18835523.4
(22) Date of filing: 18.07.2018
(51) Int. Cl.: F16H 1/16, B62D 5/04, F16H 55/24, H02K 7/116

(54) **WORM SPEED REDUCER**

(30) Priority: 19.07.2017 JP 2017139586
(71) Applicant: NSK Ltd., Tokyo 141-8560 (JP)
(72) Inventor: FUJITA Akihide, Maebashi-shi Gunma 371-8527 (JP)
(74) Representative: Mewburn Ellis LLP
(86) International application number: PCT/JP2018/026951
(87) International publication number: WO 2019/017397

(57) **Abstract**

In a worm reducer (16), an urging member (22) includes an urging shaft portion (40) and an elastic pressing portion (41). The urging shaft portion (40) is rotatably disposed inside a housing (9) in a state in which a rotation center axis (O₄₀) thereof is directed substantially parallel to a center axis of the worm wheel. The elastic pressing portion (41) formed of an elastic material is externally fitted and fixed to a part of the urging shaft portion (40) in an axial direction in an eccentric state with respect to the rotation center axis (O₄₀) of the urging shaft portion (40). By rotating the urging shaft portion (40), an outer peripheral surface of the elastic pressing portion (41) is pressed against an outer peripheral surface of a second bearing (20) externally fitted to a worm shaft (17). Accordingly, the present invention realizes a structure of the worm reducer capable of suppressing a backlash while preventing an increase in size of the housing.

## Description

### TECHNICAL FIELD

The present invention relates to a worm reducer to be assembled in an electric power steering device or the like.

### BACKGROUND ART

A power steering device is widely used to reduce a force required for a driver to operate a steering wheel. There are two types of power steering devices. One is an electric power steering device using an electric motor as an auxiliary power source, and the other is a hydraulic power steering device using hydraulic pressure as an auxiliary power source. Since the electric power steering device has advantages compared to the hydraulic power steering device, such as a smaller size and a lighter weight, easy control of magnitude of auxiliary power, and less power loss of an engine, it has become mainstream.

In the electric power steering device, auxiliary power of the electric motor is applied to a steering rotation shaft which rotates based on an operation of the steering wheel via a reducer. As such a reducer, a worm reducer is widely used for reasons such as obtaining a large reduction ratio.

Since there is an inevitable backlash in a meshing portion between a worm wheel and a worm shaft configuring the worm reducer, there is a problem that when a rotation direction of the worm wheel changes, a gear rattling noise tends to be generated.

Patent Document 1 discloses a structure which includes a pair of bearings for rotatably supporting a worm shaft with respect to a housing, wherein the bearing disposed on a tip end side of the worm shaft is urged toward a worm wheel by an urging member. According to this configuration, a backlash of a meshing portion can be suppressed, and occurrence of a gear rattling noise can be suppressed.

### PRIOR ART DOCUMENT

### PATENT DOCUMENT

Patent Document 1: JP-A-2013-155789

### SUMMARY OF INVENTION

### TECHNICAL PROBLEM

However, in the structure described in Patent Document 1, an urging member is disposed at a side opposite to the worm wheel with the worm shaft interposed therebetween so as to be movable in a meshing direction between the worm shaft and the worm wheel. Therefore, there is a possibility that a protrusion amount of a portion of the housing which accommodates the urging member increases, and thus, the housing, and furthermore the worm reducer are increased in size.

The present invention has been made in view of the above circumstances, and an object thereof is to realize a structure capable of suppressing a backlash while preventing an increase in size of a housing.

### SOLUTION TO PROBLEM

A worm reducer according to the present invention includes a housing, a worm shaft, a worm wheel, a first bearing, a second bearing, and an urging member.

The worm shaft is disposed inside the housing, and one end portion thereof on one axial side is connected to a motor output shaft of an electric motor so as to allow the worm shaft to pivot.

The worm wheel is disposed inside the housing and meshes with the worm shaft.

The first bearing rotatably supports one axial side portion of the worm shaft with respect to the housing.

The second bearing rotatably supports the other axial side portion of the worm shaft.

The urging member urges the other axial side portion of the worm shaft in a direction approaching the worm wheel via the second bearing, and includes an urging shaft portion which is disposed inside the housing so as to be rotatable around a rotation center axis directed substantially parallel to a center axis of the worm wheel, and an elastic pressing portion which is formed of an elastic material and attached to the urging shaft portion in an eccentric state with respect to a rotation center axis of the urging shaft portion such that a part of an outer peripheral surface of the elastic pressing portion is in contact with an outer peripheral surface of the second bearing.

According to the present invention, the elastic pressing portion may urge the second bearing along a direction orthogonal to both an axial direction of the worm shaft and an axial direction of the worm wheel.

In the present invention, the elastic pressing portion may include a cylindrical surface having an equal outer diameter over an entire axial length of the outer peripheral surface of the second bearing in contact therewith.

In the present invention, the urging shaft portion may include an eccentric shaft portion having a center axis eccentric with respect to the rotation center axis of the urging shaft portion on a part of the urging shaft portion in an axial direction, and the elastic pressing portion may be externally fitted to the eccentric shaft portion.

In the present invention, in a state in which a pressing force is applied from the elastic pressing portion to the second bearing, a part of the elastic pressing portion positioned between the urging shaft portion and the second bearing may be elastically deformed in a radial direction.

In the present invention, the urging member may include a rotation stopping member configured to prohibit the urging shaft portion from rotating relative to the housing in a state in which the urging shaft portion is positioned at a predetermined rotation angle.

### ADVANTAGEOUS EFFECTS OF INVENTION

According to the present invention, a structure capable of suppressing the backlash while preventing an increase in size of the housing can be realized.

### BRIEF DESCRIPTION OF DRAWINGS

Fig. 1 is a partially cutout side view of a steering device including a worm reducer according to a first embodiment.
Fig. 2 is a sectional view taken along a line A-A in Fig. 1 showing the first embodiment.
Fig. 3 is a sectional view taken along a line B-B in Fig. 1 showing the first embodiment.
Figs. 4A to 4C are views showing the first embodiment, wherein Fig. 4A is a perspective view showing an urging member taken out, Fig. 4B is a perspective view showing an urging shaft portion taken out, and Fig. 4C is a perspective view showing an elastic pressing portion taken out.
Figs. 5A and 5B show a state before a second bearing is urged by the urging member, wherein Fig. 5A is a view corresponding to a cross section taken along a line C-C in Fig. 2, and Fig. 5B is a sectional view taken along a line D-D in Fig. 5A.
Figs. 5C and 5D show a state in which the second bearing is urged by the urging member, wherein Fig. 5C is a view corresponding to a cross section taken along the line C-C in Fig. 2, and Fig. 5D is a sectional view taken along a line E-E in Fig. 5C.
Figs. 6A to 6C are views corresponding to Figs. 4A to 4C showing a second embodiment.

### DESCRIPTION OF EMBODIMENTS

### [First Embodiment]

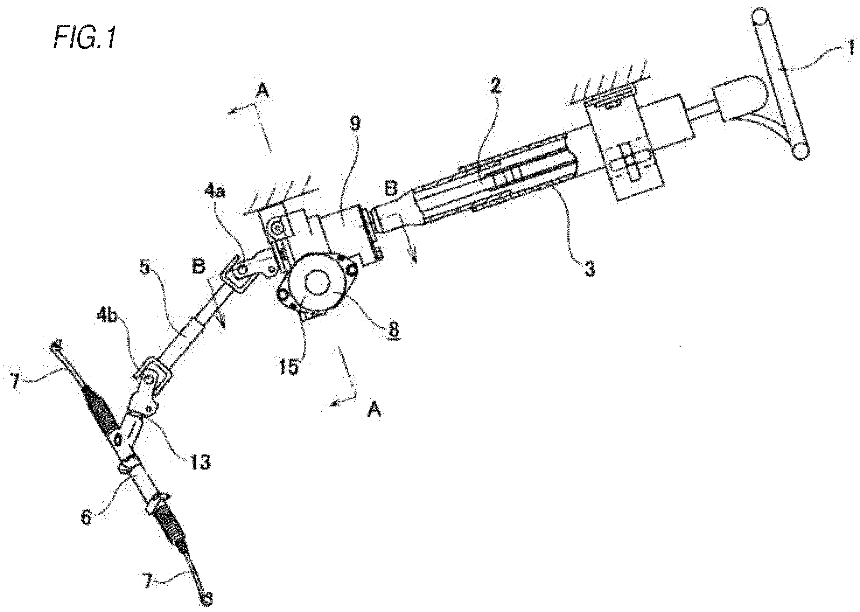

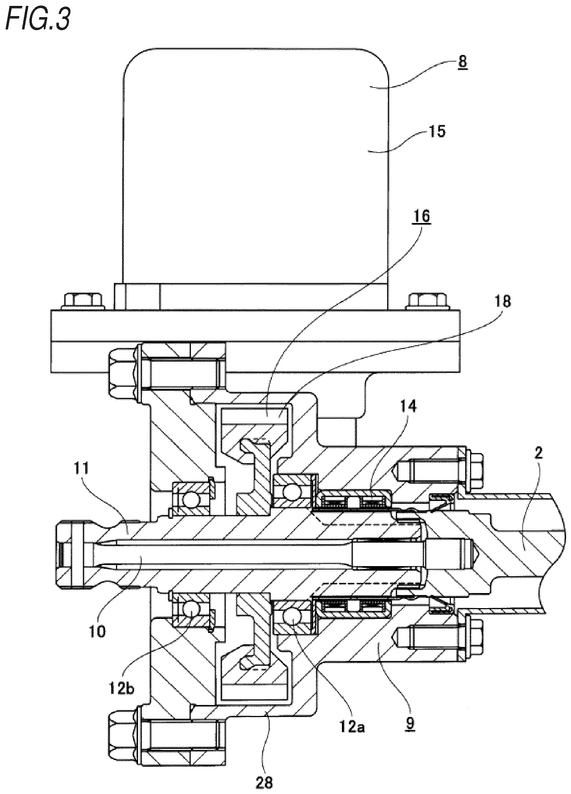

A first embodiment will be described with reference to Figs. 1 to 5D.

### <Overall Structure of Electric Power Steering Device>

An electric power steering device is a column assist type electric power steering device and includes a steering wheel 1, a steering shaft 2, a steering column 3, a pair of universal joints 4a, 4b, an intermediate shaft 5, a steering gear unit 6, a pair of tie rods 7, and an electric assist device 8.

The steering wheel 1 is attached to a rear end portion of the steering shaft 2 rotatably supported inside the steering column 3. A front end portion of the steering shaft 2 is disposed inside a housing 9 fixed to a front end portion of the steering column 3 and is connected to an output shaft 11 via a torsion bar 10.

The output shaft 11 is rotatably supported inside the housing 9 via a pair of rolling bearings 12a, 12b. Rotation of the output shaft 11 is transmitted to a pinion shaft 13 of the steering gear unit 6 via the pair of universal joints 4a, 4b and the intermediate shaft 5. Further, the rotation of the pinion shaft 13 is converted into a linear motion of a rack (not shown), so that the pair of tie rods 7 is pushed and pulled to apply a steering angle to a steering wheel.

The electric assist device 8 reduces a force required for a driver to operate the steering wheel 1 and includes a torque sensor 14, an ECU (not shown), an electric motor 15, and a worm reducer 16.

The torque sensor 14 is disposed around the output shaft 11 and detects a twist direction and a twist amount of the output shaft 11. The ECU determines an auxiliary torque based on information on a steering torque calculated based on the twist direction and the twist amount of the output shaft 11 detected by the torque sensor 14, information on a vehicle speed measured by a vehicle speed sensor (not shown), or the like. The electric motor 15 is supported and fixed to the housing 9, and an energizing direction and an energizing amount thereof are controlled by the ECU. The worm reducer 16 decelerates a rotational force of the electric motor 15 and transmits it to the output shaft 11. Accordingly, the auxiliary torque is applied to the output shaft 11, and the pair of tie rods 7 can be pushed and pulled with a force larger than the force applied to the steering wheel 1.

### <Structure of Worm Reducer>

The worm reducer 16 includes the housing 9, a worm shaft 17, a worm wheel 18, a first bearing 19, a second bearing 20, a guide member 21, and an urging member 22.

The worm shaft 17 includes a first support shaft portion 23 on one axial side portion, a second support shaft portion 24 on the other axial side portion, and a worm teeth portion 25 at an axially intermediate portion between the first support shaft portion 23 and the second support shaft portion 24. The worm shaft 17 is disposed inside a bottomed cylindrical worm shaft accommodating portion 26 configuring the housing 9. A base end portion which is an end portion on one axial side of the worm shaft 17 is connected to a motor output shaft 15a of the electric motor 15 so as to allow transmission of a rotational force by spline engagement or the like and allow a slight pivotal displacement of the worm shaft 17. Incidentally, the end portion of the worm shaft 17 on one axial side can also be connected to the motor output shaft 15a so as to allow the pivotal displacement of the worm shaft via a connecting member which enables transmission of another rotational force, such as a torque transmission joint including an elastic body.

The worm wheel 18 is fixed to the output shaft 11 and includes a worm wheel teeth portion 27 which meshes with the worm teeth portion 25 on an outer peripheral surface thereof. The worm wheel 18 is disposed inside a cylindrical worm wheel accommodating portion 28 configuring the housing 9. Incidentally, since the electric power steering device according to the present embodiment is a column assist type, the worm wheel 18 is fixed to the output shaft 11, whereas in a pinion assist type electric power steering device, the worm wheel is fixed to a pinion shaft.

An inner peripheral surface of the worm shaft accommodating portion 26 is formed into a concave cylindrical surface shape, and a part of an axially intermediate portion in a circumferential direction is open to the worm wheel accommodating portion 28. That is, an internal space of the worm shaft accommodating portion 26 and an internal space of the worm wheel accommodating portion 28 are connected to each other.

The first bearing 19 is a ball bearing such as a single-row deep groove type or four-point contact type ball bearing and includes an annular inner ring 29, an annular outer ring 30, and a plurality of balls 31. The inner ring 29 is externally fitted and fixed to the first support shaft portion 23 of the worm shaft 17. The outer ring 30 is internally fitted and fixed to an opening side portion of the worm shaft accommodating portion 26. The first bearing 19 has a radial clearance between the inner ring 29 and the outer ring 30 and the balls 31. In the present embodiment, since the base end portion of the worm shaft 17 is pivotally connected to the motor output shaft 15a, and an internal clearance is set in the first bearing 19 which rotatably supports the first support shaft portion 23 of the worm shaft 17, the worm shaft 17 is pivotally supported to the worm shaft accommodating portion 26 with a center of the first bearing 19 as a fulcrum.

The second bearing 20 is a single-row deep groove type ball bearing and includes an annular inner ring 32, an annular outer ring 33, and a plurality of balls 34. The inner ring 32 is externally fitted and fixed to the second support shaft portion 24 of the worm shaft 17. The outer ring 33 is disposed inside the guide member 21 which is internally fitted and fixed to a bottom side portion of the worm shaft accommodating portion 26.

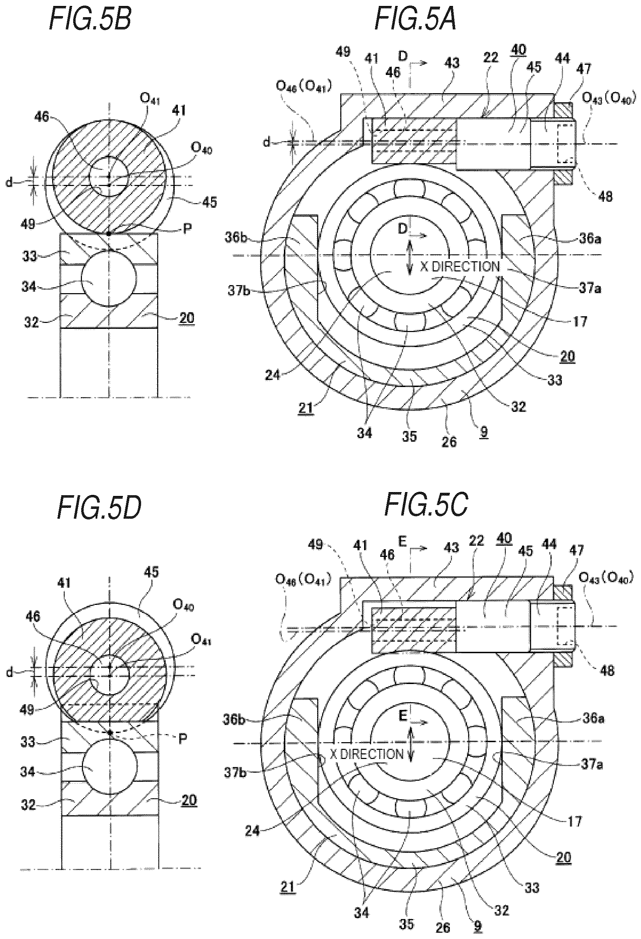

The guide member 21 is formed of, for example, a synthetic resin and is formed into a substantially U-shape as a whole, and is internally fitted and fixed inside the worm shaft accommodating portion 26 by press-fitting. The guide member 21 includes a bottom plate portion 35 having a partial cylindrical shape, and a pair of side plate portions 36a, 36b respectively extending from both end portions of the bottom plate portion 35 in an X direction (an upper-lower direction in Fig. 5) which coincides with a meshing direction of the worm teeth portion 25 and the worm wheel teeth portion 27. An outer peripheral surface of the guide member 21 is formed into a convex cylindrical surface shape. Incidentally, the X direction is a direction orthogonal to both an axial direction of the worm shaft 17 and an axial direction of the worm wheel 18.

The mutually facing surfaces of the pair of side plate portions 36a, 36b are a pair of guide surfaces 37a, 37b which are flat surfaces and parallel to each other. The pair of guide surfaces 37a, 37b are disposed on both outer sides of the second bearing 20 in the axial direction of the worm wheel 18 and in parallel with the X direction. A distance between the pair of guide surfaces 37a, 37b is slightly larger than an outer diameter of the second bearing 20. Therefore, the pair of guide surfaces 37a, 37b guides a movement of the second bearing 20 in the X direction, which is a movement toward and away from the worm wheel 18.

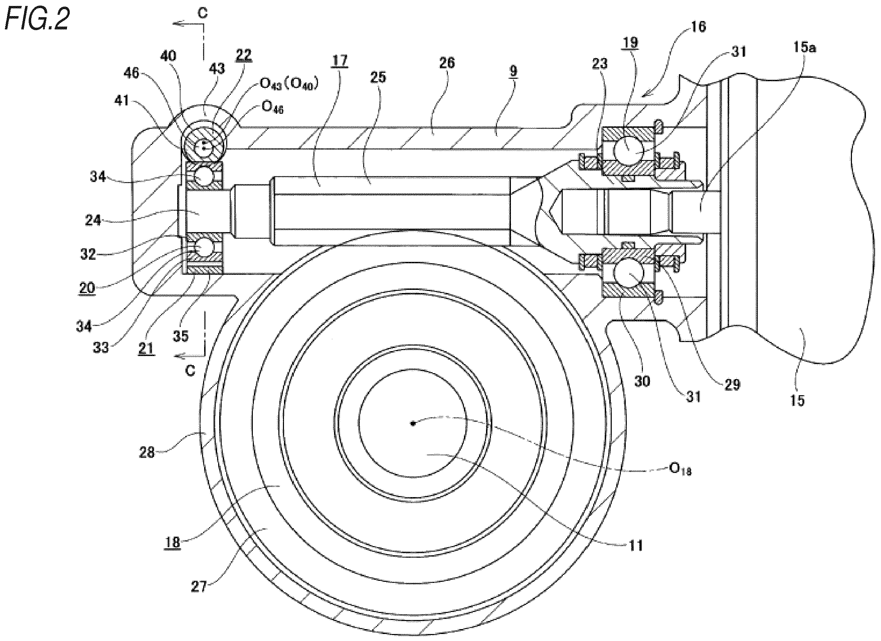

The urging member 22 urges the other axial side portion of the worm shaft 17 in a direction approaching the worm wheel 18 (a lower side in Figs. 2 and 5) via the second bearing 20 and includes an urging shaft portion 40 and an elastic pressing portion 41. The urging member 22 is disposed inside an urging member accommodating portion 43 configuring the housing 9.

The urging member accommodating portion 43 is provided at a side (an upper side in Figs. 2 and 5) opposite to the worm wheel accommodating portion 28 with the worm shaft accommodating portion 26 interposed therebetween and at a twisted position with respect to the worm shaft accommodating portion 26. A center axis O₄₃ of the urging member accommodating portion 43 is disposed substantially parallel to a center axis O₁₈ of the worm wheel 18. An inner peripheral surface of the urging member accommodating portion 43 is formed into a concave cylindrical surface shape, and a part in a circumferential direction thereof is open to the worm shaft accommodating portion 26. Therefore, an internal space of the urging member accommodating portion 43 and the internal space of the worm shaft accommodating portion 26 are connected to each other. An end portion of the urging member accommodating portion 43 at only one axial side (a right side in Figs. 5A and 5C) is open.

The urging shaft portion 40 is formed into a substantially columnar shape as a whole and is disposed inside the urging member accommodating portion 43 so as to be rotatable around a rotation center axis O₄₀ in a state in which the rotation center axis O₄₀ of the urging shaft portion 40 coincides with the center axis O₄₃ of the urging member accommodating portion 43. Therefore, the rotation center axis O₄₀ of the urging shaft portion 40 is disposed substantially parallel to the center axis O₁₈ of the worm wheel 18. That is, the rotation center axis O₄₀ of the urging shaft portion 40 is not limited to being completely parallel to the center axis O₁₈ of the worm wheel 18, but can also be inclined so long as an outer peripheral surface of the elastic pressing portion 41 externally fitted and fixed to the urging shaft portion 40 can be pressed against an outer peripheral surface of the second bearing 20 and the second support shaft portion 24 of the worm shaft 17 can be urged in the direction approaching the worm wheel 18, based on rotation of the urging shaft portion 40, as will be described later. Specifically, an inclination angle of the rotation center axis O₄₀ of the urging shaft portion 40 with respect to the center axis O₁₈ of the worm wheel 18 is about 0 degrees ± 10 degrees. In addition, the rotation center axis O₄₀ of the urging shaft portion 40 is provided at a position aligned with a center portion of the second bearing 20 in the axial direction of the worm shaft 17.

The urging shaft portion 40 includes a male screw portion 44 on one axial side portion close to an opening portion of the urging member accommodating portion 43, a large-diameter shaft portion 45 having a circular cross section on the other axial side of the male screw portion 44, and an eccentric shaft portion 46 having a circular cross section on the other axial side of the large-diameter shaft portion 45 and on the other axial side portion close to an innermost portion of the urging member accommodating portion 43. The eccentric shaft portion 46 has a smaller diameter than the large-diameter shaft portion 45, and a center axis O₄₆ thereof is eccentric by a predetermined amount d with respect to the rotation center axis O₄₀ of the urging shaft portion 40.

In the male screw portion 44, a nut 47 is screwed to a portion thereof exposed to the outside from the opening portion of the urging member accommodating portion 43. Further, an axial side surface of the nut 47 abuts against a periphery of the opening portion of the urging member accommodating portion 43 of the housing 9 to prohibit the urging shaft portion 40 from being inadvertently rotated relative to the housing 9. A locking recessed portion 48 which can lock a tool used to rotate the urging shaft portion 40 is provided on one axial end surface of the urging shaft portion 40.

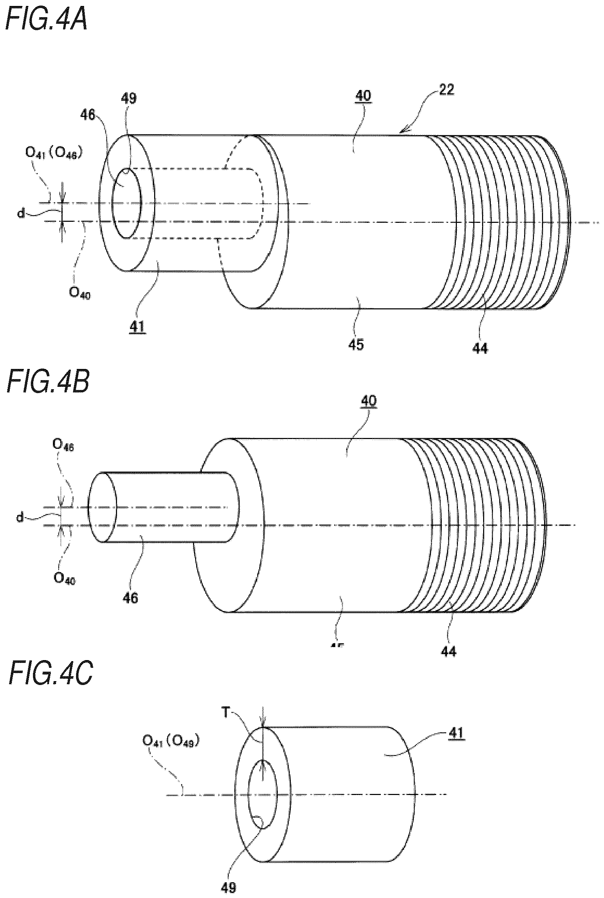

The elastic pressing portion 41 is formed of an elastic material such as a rubber into a hollow cylindrical shape as a whole. In the present embodiment, an center axis O₄₁ of the elastic pressing portion 41 passing through a curvature center of the outer peripheral surface of the elastic pressing portion 41 and a center axis O₄₉ of a penetration hole 49 provided so as to penetrate the elastic pressing portion 41 are coaxially disposed (refer to Fig. 4C). Therefore, a radial thickness dimension T of the elastic pressing portion 41 is constant over the entire circumference in a free state. In an example shown in the drawings, the radial thickness dimension T of the elastic pressing portion 41 is larger than the eccentric amount d of the center axis O₄₆ of the eccentric shaft portion 46 with respect to the rotation center axis O₄₀ of the urging shaft portion 40. The elastic pressing portion 41 is externally fitted and fixed to the eccentric shaft portion 46 so as to be non-rotatable relative thereto by inserting (press-fitting) the eccentric shaft portion 46 into the penetration hole 49. Therefore, the center axis O₄₁ of the elastic pressing portion 41 coincides with the center axis O₄₆ of the eccentric shaft portion 46 and is eccentric by the predetermined amount d with respect to the rotation center axis O₄₀ of the urging shaft portion 40. Incidentally, as described later, hardness (elasticity) of the elastic pressing portion 41 is regulated to an appropriate value such that a backlash can be suppressed at a meshing portion between the worm teeth portion 25 and the worm wheel teeth portion 27, and meshing resistance of the meshing portion does not increase. In addition, in order to prevent the elastic pressing portion 41 from rotating relative to the eccentric shaft portion 46, the elastic pressing portion 41 may be adhered to the eccentric shaft portion 46, or a cross-sectional shape of the penetration hole 49 and the eccentric shaft portion 46 may be non-circular (including polygonal, elliptical, or the like) and the elastic pressing portion 41 and the eccentric shaft portion 46 may be noncircularly fitted.

The urging member 22 according to the present embodiment presses the outer peripheral surface of the elastic pressing portion 41 against an outer peripheral surface of the outer ring 33 configuring the second bearing 20 by rotating the urging shaft portion 40 relative to the housing 9 using the locking recessed portion 48 provided on one axial end surface of the urging shaft portion 40. Specifically, as shown in Figs. 5A and 5B, the urging shaft portion 40 is rotated by a predetermined angle from an initial state (a retracted state) in which the center axis O₄₁ of the elastic pressing portion 41 is positioned farthest from the second bearing 20 in the X direction (the upper side in Figs. 5A and 5B). Further, a distance from the rotation center axis O₄₀ of the urging shaft portion 40 to an end portion (point P that is a lower end portion in Fig. 5) on the second bearing 20 side in the X direction of the outer peripheral surface of the elastic pressing portion 41 in a free state is increased. Accordingly, the outer peripheral surface of the elastic pressing portion 41 is pressed against the outer peripheral surface of the outer ring 33 configuring the second bearing 20. In particular, as shown in Figs. 5C and 5D, assuming that elastic deformation does not occur in the elastic pressing portion 41 in a state (a state in which the urging shaft portion 40 is rotated by 180 degrees from the initial state) in which the center axis O₄₁ of the elastic pressing portion 41 is positioned closest to the second bearing 20 with respect to the X direction (a lower side in Fig. 5), a distance from the rotation center axis O₄₀ to the point P becomes larger by twice the eccentric amount d than that in the initial state. Therefore, the outer peripheral surface of the elastic pressing portion 41 can press the outer peripheral surface of the outer ring 33 configuring the second bearing 20 with a sufficiently large force.

The second support shaft portion 24 of the worm shaft 17 is urged in the direction approaching the worm wheel 18 via the second bearing 20, and the worm shaft 17 is pivoted with respect to the worm shaft accommodating portion 26 with the center of the first bearing 19 as a fulcrum. Accordingly, the worm teeth portion 25 is elastically pressed against the worm wheel teeth portion 27. As a result, the backlash at the meshing portion between the worm teeth portion 25 and the worm wheel teeth portion 27 can be suppressed, and occurrence of a gear rattling noise can be effectively prevented. Incidentally, a rotation angle of the urging shaft portion 40 is appropriately adjusted such that the meshing resistance of the meshing portion between the worm teeth portion 25 and the worm wheel teeth portion 27 does not become excessively large in consideration of the eccentric amount d, a size of the radial thickness dimension T of the elastic pressing portion 41, or the like.

As described above, in the present embodiment, by rotating the urging shaft portion 40 having the rotation center axis O₄₀ disposed substantially parallel to the center axis O₁₈ of the worm wheel 18 around the rotation center axis O₄₀ inside the housing 9, the other axial side portion of the worm shaft 17 can be pressed in the direction approaching the worm wheel 18 via the second bearing 20 by the elastic pressing portion 41 externally fitted to the urging shaft portion 40. Accordingly, a protrusion amount of the housing 9 in a radial direction of the urging member accommodating portion 43 accommodating the urging member 22 can be suppressed. Therefore, according to the present embodiment, the backlash can be suppressed while preventing an increase in size of the housing 9.

In the present embodiment, in a state (for example, a state shown in Figs. 5C and 5D) in which the urging shaft portion 40 is rotated from the initial state and a pressing force is applied from the elastic pressing portion 41 to the second bearing 20, for example, a part of the elastic pressing portion 41 positioned between the eccentric shaft portion 46 and the second bearing 20 is elastically deformed in the radial direction. In other words, a part of the elastic pressing portion 41 in a circumferential direction is sandwiched between the eccentric shaft portion 46 and the second bearing 20 in a state of being elastically compressed. Therefore, when wear occurs in the meshing portion between the worm teeth portion 25 and the worm wheel teeth portion 27, an abutting position between the elastic pressing portion 41 and the second bearing 20 can move to a side (the lower side in Fig. 5) close to the worm wheel 18 by elastic restoration of the elastic pressing portion 41. Accordingly, a pivot angle of the worm shaft 17 can be automatically increased according to a wear amount generated on the meshing portion. Therefore, even when the wear occurs in the meshing portion, the occurrence of the gear rattling noise can be suppressed.

Further, in the present embodiment, when a meshing repulsion force is applied from the worm wheel 18 to the worm shaft 17, and the worm shaft 17 moves in a direction away from the worm wheel 18, since the elastic pressing portion 41 is elastically deformed by the second bearing 20, a surface pressure of the meshing portion can be prevented from becoming excessively large. In addition, even when the worm shaft 17 moves in the direction away from the worm wheel 18 due to influence of a coaciality tolerance between the center axis of the worm shaft 17 and the center axis of the worm teeth portion 25 and thermal expansion generated in a peripheral member such as the worm wheel 18, the elastic pressing portion 41 is elastically deformed, so that the surface pressure of the meshing portion can be prevented from becoming excessively large.

In the present embodiment, since the elastic pressing portion 41 urges the second bearing 20 along the X direction, the other axial side portion of the worm shaft 17 can be pressed via the second bearing 20 without applying an urging force in the axial direction of the worm wheel 18.

### [Second Embodiment]

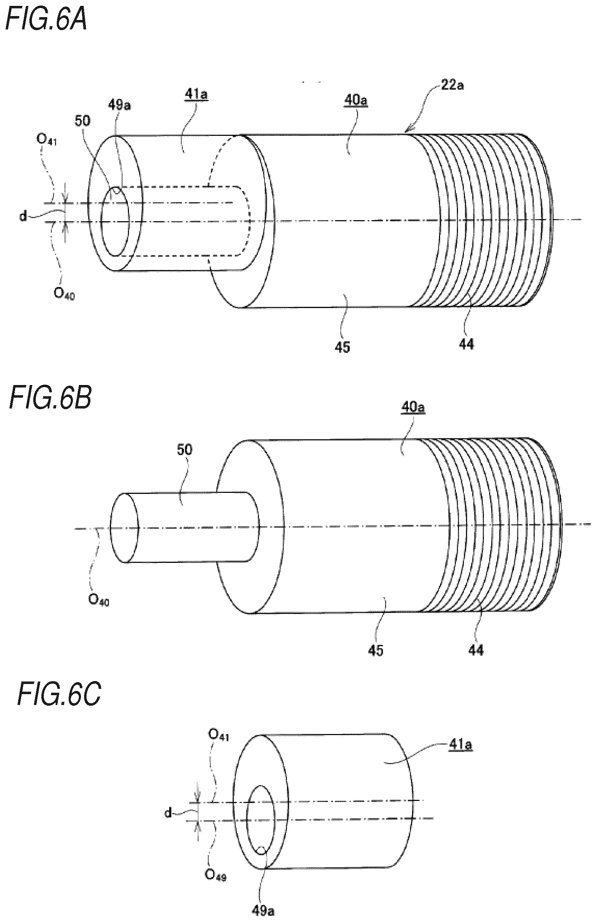

A second embodiment will be described with reference to Fig. 6. An urging member 22a according to the present embodiment includes an urging shaft portion 40a and an elastic pressing portion 41a. The urging shaft portion 40a includes the male screw portion 44 on one axial side portion, the large-diameter shaft portion 45 having the circular cross section on the other axial side of the male screw portion 44, and a small-diameter shaft portion 50 having the circular cross section on the other axial side of the large-diameter shaft portion 45. The small-diameter shaft portion 50 has a smaller diameter than the large-diameter shaft portion 45, and a center axis thereof is coaxial with the rotation center axis O₄₀ of the urging shaft portion 40a.

The elastic pressing portion 41a is formed of an elastic material such as a rubber into a hollow cylindrical shape as a whole. In particular, in the present embodiment, a center axis O₄₉ of a penetration hole 49a provided so as to penetrate the elastic pressing portion 41a is eccentric by the predetermined amount d with respect to the center axis O₄₁ of the elastic pressing portion 41a passing through a curvature center of an outer peripheral surface of the elastic pressing portion 41a. Accordingly, a radial thickness dimension of the elastic pressing portion 41a is changed in a size in the circumferential direction in a free state. The elastic pressing portion 41a is externally fitted and fixed to the small-diameter shaft portion 50 so as to be non-rotatable relative thereto by inserting (press-fitting) the small-diameter shaft portion 50 into the penetration hole 49a. Therefore, the center axis O₄₁ of the elastic pressing portion 41a is eccentric by the predetermined amount d with respect to the rotation center axis O₄₀ of the urging shaft portion 40a.

The urging member 22a according to the present embodiment as described above can also press the outer peripheral surface of the elastic pressing portion 41a against the outer peripheral surface of the second bearing 20 (refer to Fig. 5) by rotating the urging shaft portion 40a relative to the housing 9 (refer to Fig. 5). That is, by rotating the urging shaft portion 40a, a distance from the rotation center axis O₄₀ of the urging shaft portion 40a to an end portion on the second bearing 20 (refer to Fig. 5) side of the outer peripheral surface of the elastic pressing portion 41a, in the X direction orthogonal to the axial direction of the worm shaft 17 (refer to Fig. 2) and the axial direction of the worm wheel 18 (refer to Fig. 2) is increased. Therefore, the other axial side portion of the worm shaft 17 can be pressed in the direction approaching the worm wheel 18 via the second bearing 20 by the outer peripheral surface of the elastic pressing portion 41a. Therefore, also in the present embodiment, the backlash can be suppressed while preventing the housing 9 from being increased in size. Further, in the present embodiment, since the male screw portion 44, the large-diameter shaft portion 45, and the small-diameter shaft portion 50 configuring the urging shaft portion 40a can be coaxial, a processing work of the urging shaft portion 40a can be simplified and manufacturing cost of the urging shaft portion 40a can be reduced. In addition, by externally fitting different types of elastic pressing portions in which a forming position (eccentric amount d) of the penetration hole is changed with respect to the urging shaft portion 40a, a pressing force applied to the second bearing can be easily changed.

Other configurations and operational effects thereof are the same as those in the first embodiment.

The present invention is not limited to the above-described embodiments and may be appropriately modified, improved, or the like.

For example, in the present embodiment, the nut 47 is screwed to the male screw portion 44 of the urging shaft portion 40 to prevent the urging shaft portion 40 from being inadvertently rotated relative to the housing 9. However, the present invention is not limited thereto. The urging member may include a rotation stopping member for prohibiting the urging shaft portion from rotating relative to the housing in a state in which the urging shaft portion is positioned at a predetermined rotation angle.

Further, in the present embodiment, the elastic pressing portion 41 is formed into a hollow cylindrical shape as a whole, but the present invention is not limited thereto so long as the elastic pressing portion has a cylindrical surface having an equal outer diameter over the entire axial length of the outer peripheral surface of the second bearing in contact therewith.

The present application is based on Japanese Patent Application No, 2017-139586 filed on July 19, 2017, contents of which are incorporated herein by reference.

### REFERENCE SIGNS LIST

1 steering wheel
2 steering shaft
3 steering column
4a, 4b universal joint
5 intermediate shaft
6 steering gear unit
7 tie rod
8 electric assist device
9 housing
10 torsion bar
11 output shaft
12a, 12b rolling bearing
13 pinion shaft
14 torque sensor
15 electric motor
16 worm reducer
17 worm shaft
18 worm wheel
19 first bearing
20 second bearing
21 guide member
22, 22a urging member
23 first support shaft portion
24 second support shaft portion
25 worm teeth portion
26 worm shaft accommodating portion
27 worm wheel teeth portion
28 worm wheel accommodating portion
29 inner ring
30 outer ring
31 ball
32 inner ring
33 outer ring
34 ball
35 bottom plate portion
36a, 36b side plate portion
37a, 37b guide surface
40, 40a urging shaft portion
41, 41a elastic pressing portion
43 urging member accommodating portion
44 male screw portion
45 large-diameter shaft portion
46 eccentric shaft portion
47 nut
48 locking recessed portion
49, 49a penetration hole
50 small-diameter shaft portion

## Claims

1. A worm reducer comprising:
a housing;
a worm shaft;
a worm wheel;
a first bearing;
a second bearing; and
an urging member,
wherein the worm shaft is disposed inside the housing, and an end portion thereof on one axial side is connected to a motor output shaft of an electric motor so as to allow the worm shaft to pivot,
wherein the worm wheel is disposed inside the housing and meshes with the worm shaft,
wherein the first bearing rotatably supports one axial side portion of the worm shaft with respect to the housing,
wherein the second bearing rotatably supports the other axial side portion of the worm shaft, and
wherein the urging member urges the other axial side portion of the worm shaft in a direction approaching the worm wheel via the second bearing and includes:
an urging shaft portion which is disposed inside the housing so as to be rotatable around a rotation center axis directed substantially parallel to a center axis of the worm wheel; and
an elastic pressing portion which is formed of an elastic material and attached to the urging shaft portion in an eccentric state with respect to the rotation center axis of the urging shaft portion such that a part of an outer peripheral surface of the elastic pressing portion is in contact with an outer peripheral surface of the second bearing.

2. The worm reducer according to claim 1,
wherein the elastic pressing portion urges the second bearing along a direction orthogonal to both an axial direction of the worm shaft and an axial direction of the worm wheel.

3. The worm reducer according to claim 2,
wherein the elastic pressing portion includes a cylindrical surface having an equal outer diameter over an entire axial length of the outer peripheral surface of the second bearing in contact therewith.

4. The worm reducer according to any one of claims 1 to 3,
wherein the urging shaft portion includes an eccentric shaft portion having a center axis eccentric with respect to the rotation center axis of the urging shaft portion on a part of the urging shaft portion in an axial direction, and the elastic pressing portion is externally fitted to the eccentric shaft portion.

5. The worm reducer according to any one of claims 1 to 4,
wherein in a state in which a pressing force is applied from the elastic pressing portion to the second bearing, a part of the elastic pressing portion positioned between the urging shaft portion and the second bearing is elastically deformed in a radial direction.

6. The worm reducer according to any one of claims 1 to 5,
wherein the urging member includes a rotation stopping member configured to prohibit the urging shaft portion from rotating relative to the housing in a state in which the urging shaft portion is positioned at a predetermined rotation angle.
